**Europäisches Patentamt**

**European Patent Office**

**Office européen des brevets**

(11) Veröffentlichungsnummer: **0 252 283**
**B1**

(19)

(12)

# EUROPÄISCHE PATENTSCHRIFT

(45) Veröffentlichungstag der Patentschrift:
**29.08.90**

(51) Int. Cl.⁵: **G01N 25/18, G01N 27/18**

(21) Anmeldenummer: **87107933.1**

(22) Anmeldetag: **02.06.87**

(54) Messeinrichtung zum Nachweis des Anteils von brennbaren Gasen in Luftgemischen.

(30) Priorität: **03.07.86 DE 3622307**

(43) Veröffentlichungstag der Anmeldung:
**13.01.88 Patentblatt 88/2**

(45) Bekanntmachung des Hinweises auf die Patenterteilung:
**29.08.90 Patentblatt 90/35**

(84) Benannte Vertragsstaaten:
**DE FR GB NL**

(56) Entgegenhaltungen:
**DE-A- 3 127 431**
**DE-B- 2 036 371**
**DE-B- 2 159 566**
**DE-B- 2 655 954**

(73) Patentinhaber: **Drägerwerk Aktiengesellschaft,**
**Moislinger Allee 53-55, D-2400 Lübeck 1(DE)**

(72) Erfinder: **Hagen, Werner, Dr. Dipl.-Physiker,**
**Hirtenweg 12, D-2407 Bad Schwartau(DE)**
Erfinder: **Brandt, Claus Dieter, Dipl.-Ing., Windberg 25,**
**D-2407 Bad Schwartau(DE)**
Erfinder: **Mahrt, Gerd, Dipl.-Ing., Benstaben 7,**
**D-2067 Barnitz(DE)**

ACTORUM AG

## Beschreibung

Die Erfindung betrifft eine Meßeinrichtung zum Nachweis des Anteils von brennbaren Gasen in Luftgemischen nach dem Oberbegriff des Anspruchs 1.

In der DE-OS 1 698 549 ist eine derartige Meßeinrichtung gezeigt, bei welcher jeweils ein Sensor für die Wärmeleitfähigkeit und für die Wärmetönung der nachzuweisenden Gaskomponente in den Brückenzweigen einer Meßbrücke angeordnet sind. Bei niedrigen Konzentrationen des brennbaren Gases übersteigt der Wärmetönungseffekt den Wärmeleitfähigkeitseffekt, so daß mit ansteigender Konzentration des brennbaren Gases auch ein ansteigendes Meßsignal im Diagonalzweig, dem Meßzweig der Meßbrücke abgreifbar ist. Bei weiterer Erhöhung der Konzentration an brennbarem Gas in Luft wird der Wärmetönungseffekt wegen des weiter abnehmenden Sauerstoffanteils im Gemisch geringer und der Wärmeleitfähigkeitseffekt nimmt in seinem Einfluß auf die Verstimmung der Meßbrücke zu. Je nach Abstimmung der einzelnen Brückenzweige aufeinander wird ab einem gewissen Wärmeleitfähigkeitssignal das Meßgerät im Meßzweig auf Vollausschlag geschaltet, um dadurch anzuzeigen, daß die Konzentration an brennbarem Gas im Luftgemisch jenseits einer festgelegten Grenze liegt. Dadurch wird insofern eine Eindeutigkeit der Anzeige erreicht, weil sonst ein Abklingen des Wärmetönungssignals bei weiter steigender Konzentration des brennbaren Gases für den Benutzer eines solchen bekannten Gerätes ungefährlich niedrige Konzentrationen vortäuschen würde.

Die bekannte Meßeinrichtung besitzt jedoch keine Möglichkeit, die Temperaturabhängigkeit des Wärmeleitfähigkeitssignals in der Auswertung zu berücksichtigen.

Bei einem weiteren bekannten Überwachungsgerät für Konzentrationen brennbarer Gase wird vorgeschlagen, in Reihe zu einer ersten Brückenschaltung, welche zur Wärmetönungsmessung herangezogen wird, eine zweite Brückenschaltung mit eigenem Kompensationswiderstand anzuschließen, welche ausschließlich zur Nutzung der Wärmeleitfähigkeit bestimmt ist (DE-OS 3 127 431).

Die Verdoppelung der Meßbrückenzahl ist jedoch aufwendig und bedeutet einen verdoppelten schaltungstechnischen Aufwand und erhöhten Energieverbrauch. Auch hier fehlt die Möglichkeit der Temperaturkorrektur des Wärmeleitfähigkeitsmeßsignals in einfacher, energiesparender Weise.

Ein aus der DE-OS 1 648 857 bekanntes Katharometer zum Nachweis des Anteils brennbarer Gase mittels Wärmeleitfähigkeitsmessung besitzt eine Meßbrücke, in deren einem Fühlerzweig ein dem zu messenden Gas ausgesetzter Heizfaden als Wärmeleitfähigkeitsfühler und in deren anderem Fühlerzweig ein gleichartiger gekapselter Heizfaden als Kompensationselement für den Einfluß wechselnder Umgebungstemperatur angeordnet sind. In der Brückendiagonale liegt das Anzeigeinstrument. Nachteilig ist der hohe Leistungsbedarf für das in gleicher Weise wie der eigentliche Meßfühler auf erhöhter Temperatur gehaltene Kompensationselement.

Demgegenüber besteht die Aufgabe der vorliegenden Erfindung darin, daß sowohl bei einer Wärmeleitfähigkeitsmessung allein als auch in Kombination mit einer Wärmetönungsmessung der Einfluß der Umgebungstemperatur auf die Wärmeleitfähigkeitsmessung durch einfache, geringste Leistung verbrauchende schaltungstechnische Mittel kompensiert wird.

Die Aufgabe wird bei einer Meßeinrichtung der eingangs genannten Art durch die Merkmale des kennzeichnenden Teils des Anspruchs 1 gelöst.

Da der Wärmeleitfähigkeitsfühler von einem konstanten Strom durchflossen wird, ist der Spannungsabfall über ihm nur abhängig von den Parametern der Wärmeleitfähigkeit und der Umgebungstemperatur. Durch die Anordnung der Kompensationsspannungsquelle wird die Temperaturabhängigkeit eliminiert, Damit wird das über dem Meßsignalanschluß abgreifbare temperaturkompensierte Signal ein Maß alleine für die Wärmeleitfähigkeit.

Es wird somit möglich, eine Wärmeleitfähigkeitsmessung unter geringem Leistungsbedarf durchzuführen, da nicht, wie bei der bekannten Meßeinrichtung, zur Temperaturkompensation ein zweiter, parallel zu dem ersten Wärmeleitfähigkeitsfühler geschalteter und in einer Kapsel gegenüber dem brennbaren nachzuweisenden Gas abgeschirmter, hohe Leistung verbrauchender Fühler in einer Meßbrücke vorgesehen zu werden braucht.

Unter der Voraussetzung einer leistungslosen Signalauskopplung am Meßsignalanschluß ist auch die Erzeugung der Kompensationsspannung mit der Kompensationsspannungsquelle unter geringstem Leistungsbedarf möglich. Dies wirkt sich insbesondere auf tragbare Geräte günstig aus. Dabei kann die Kompensationsspannung allgemein dadurch erzeugt werden, daß passive Bauelemente von einem Strom durchflossen werden, oder auch daß aktive Bauelemente selbst,wie z.B. ein Thermoelement, die temperaturabhängige Kompensationsspannung erzeugen. Im Gegensatz zu den bekannten Meßeinrichtungen ist es nicht mehr erforderlich, zusätzliche gekapselte und ansonsten den Leitfähigkeitsfühlern gleichartige Kompensationswiderstände vorzusehen, die außerdem hohe Leistung verbrauchen.

In besonders einfacher Weise kann die Kompensationsspannungsquelle aus einer Kompensations-Konstantstromquelle bestehen, zu der parallel ein abgleichbarer Temperaturmeßfühler geschaltet ist. Der Temperaturmeßfühler, der vorzugsweise in der Nähe des Wärmeleitfähigkeitsfühlers angeordnet ist, besitzt dieselbe Temperaturcharakteristik wie der Wärmeleitfähigkeitsfühler bei konstantem Stromdurchfluß. Zur besseren Anpassung kann der Temperaturmeßfühler-Widerstand abgleichbar sein.

Ein besonders einfacher Abgleich wird dadurch erzielt, daß dem Temperaturmeßfühler ein temperaturunabhängiger veränderbarer Vorwiderstand vorgeschaltet ist. Durch geeignete Wahl von Stromstärke der Kompensations-Konstantstromquelle und des Vorwiderstandes ist eine genügende Temperaturkompensation der Spannungsabfalländerung über dem Wärmeleitfähigkeitsfühler erreichbar, da von einem linearen Temperaturkennlinienverlauf ausgegangen werden kann.

Eine Meßeinrichtung zum Nachweis des Anteils von brennbaren Gasen in Luftgemischen kann das Wärmeleitfähigkeitssignal auch dadurch meßbar machen, daß der Meßsignalanschluß über dem Wärmeleitfähigkeitsfühler an eine Signalverarbeitungsanlage angeschlossen ist. Diese Anlage berücksichtigt durch einen angeschlossenen Temperaturfühler die Temperaturabhängigkeit des Wärmeleitfähigkeitssignals und korrigiert dieses bezüglich der Temperatur. Auf diese Weise wird eine leistungsarme, temperaturunabhängige Messung der Wärmeleitfähigkeit ermöglicht, wozu kein zusätzlicher, der Temperaturkompensation dienender gekapselter Vergleichsmeßfühler notwendig ist.

Die Signalverarbeitungsanlage enthält einen Multiplexer, der abwechselnd den Diagonalzweig der Meßbrücke für die Wärmetönungsmessung abfragt und bei überschreiten eines Grenzwertes das Wärmeleitfähigkeitssignal zusammen mit der dazugehörigen Temperatur aufnimmt, und sämtliche Signale über einen Analog-Digital-Wandler an einen Mikroprozessor abgibt. In dem Mikroprozessor ist die Temperaturkennlinie gespeichert, so daß jedes Wärmeleitfähigkeitssignal korrigiert angezeigt oder weiterverarbeitet werden kann.

Bei einer kombinierten Messung von Wärmetönung und Wärmeleitfähigkeit eines brennbares Gases mit Hilfe einer Meßbrücke wird erreicht, daß im unteren Konzentrationsbereich eine genauere Wärmetönungsmessung durchgeführt werden kann, die in einem höheren Konzentrationsbereich, z.B. ab der unteren Explosionsgrenze (UEG) von der Wärmeleitfähigkeitsmessung abgelöst wird, so daß eine eindeutige Zuordnung von Gaskonzentration und Meßsignal ermöglicht wird. Dabei wird das Wärmeleitfähigkeitssignal durch die Kompensationsschaltung von der Umgebungstemperatur des Wärmeleitfähigkeitsfühlers unabhängig.

Die Vergleichswiderstände in der Meßbrücke werden so hochohmig gewählt, daß durch die Meßfühler praktisch konstanter Strom fließt. Das Meßsignal für die Wärmetönung ist über den Diagonalzweig abgreifbar, wobei der Anteil der Wärmeleitfähigkeit in dem Wärmetönungssignal durch den Wärmeleitfähigkeitsfühler eliminiert ist.

Ausführungsbeispiele der Erfindung sind anhand einer schematischen Zeichnung dargestellt und im folgenden näher erläutert. Es zeigen:

Fig. 1 eine Brückenschaltung zur Wärmeleitfähigkeits- und Wärmetönungsmessung, mit Kompensationsspannungsquelle für die Wärmeleitfähigkeitsmessung,
Fig. 2 eine Schaltungsanordnung mit Rechenwerk zur Signalverarbeitung.

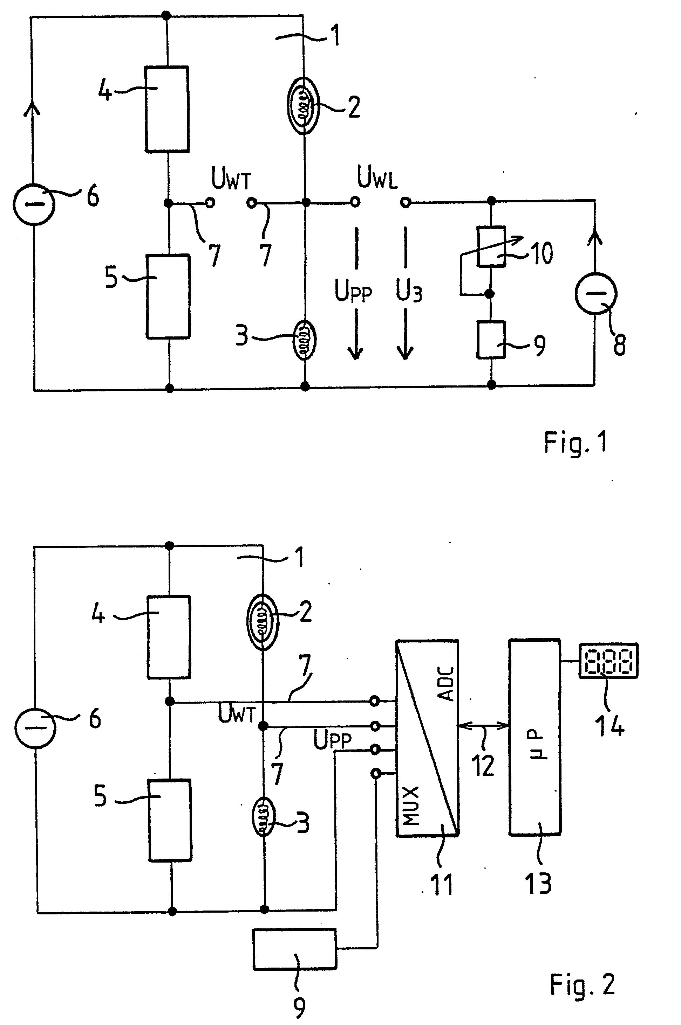

In Fig. 1 ist eine Meßbrücke (1) gezeigt, welche einen katalytisch wirksamen Wärmetönungsmeßfühler (2) und einen Wärmeleitfähigkeitsfühler (3) mit entsprechenden Kompensationswiderständen (4,5) enthält. Die Meßbrücke (1) wird durch eine Konstantstromquelle (6) gespeist. Im Diagonalzweig (7) der Meßbrücke ist das Wärmetönungssignal $U_{WT}$ abgreifbar. Parallel zu dem Wärmeleitfähigkeitsfühler (3) sind in Serie ein Meßsignalanschluß $U_{WL}$ und eine Kompensationsspannungsquelle geschaltet, die aus einer Kompensations-Konstantstromquelle (8) und einem dazu parallel angeordneten Temperaturmeßfühler (9) mit vorgeschaltetem temperaturunabhängigen Abgleichwiderstand (10) besteht. Der temperaturabhängige Spannungsabfall $U_3$ über dem Temperaturmeßfühler (9) und Abgleichwiderstand (10) entspricht bei dessen geeignetem Abgleich und entsprechend eingestellter Stromstärke der Kompensations-Konstantstromquelle (8) dem temperaturabhängigen Anteil des Spannungsabfall $U_{pp}$ über dem Wärmeleitfähigkeitsfühler (3) und eliminiert diesen infolge seiner entgegengesetzten Polung. Somit ist ein temperaturunabhängiges Spannungssignal $U_{WL}$ aus Meßsignalanschluß abgreifbar.

In Fig. 2 ist die Meßbrücke (1) aus Fig. 1 mit ihrem Diagonalzweig (7) an einen Multiplexer mit Analog-Digital-Wandler (11) angeschlossen, welcher zugleich an den Wärmeleitfähigkeitsfühler (3) und den Temperaturmeßfühler (9) angeschlossen ist. Die so aufbereiteten Signale werden über eine Übertragungsleitung (12) an einen Mikroprozessor (13), der auch die Funktionen des Multiplexers und Analog-Digital-Wandlers (11) steuert, weitergegeben und beispielsweise über eine Anzeigeeinheit (14) als Meßwert darstellt, nachdem die Meßsignale durch die im Mikroprozessor (13) gespeicherte Temperaturkennlinie des Wärmeleitfähigkeitssensors (3) korrigiert wurden.

Ein Gerät allein zur Messung der Wärmeleitfähigkeit würde den Figuren 1 oder 2 entsprechen mit der Abwandlung, daß der Wärmetönungsmeßfühler (2), die Kompensationswiderstände (4,5) und der Diagonalzweig (7) entfallen und die Konstantstromquelle (6) direkt mit den beiden Anschlüssen des Wärmeleitfähigkeitsfühlers (3) verbunden ist.

**Patentansprüche**

1. Meßeinrichtung zum Nachweis des Anteils von brennbaren Gasen in Luft, insbesondere von Methan in Luft, mit mindestens einem Wärmeleitfähigkeitsmeßkreis, der einen auf die Wärmeleitfähigkeit des nachzuweisenden Gasanteils ansprechenden Wärmeleitfähigkeitsmeßfühler (3) sowie eine an den Fühler (3) angeschlossene Konstantstromquelle (6) und einen Meßsignalanschluß ($U_{WL}$) aufweist dadurch gekennzeichnet, daß als Parallelzweig zum Wärmeleitfähigkeitsfühler (3) eine Reihenschaltung, die als Meßsignalanschluß ($U_{WL}$) und einer Kompensationsspannungsquelle (8, 9, 10) besteht, derart vorgesehen ist, daß die an dem Wärmeleitfähigkeitsfühler (3) einerseits und an dem Meßsignalanschluß ($U_{WL}$) andererseits anliegende Spannung der Kompensationsspannungsquelle dem Betrage nach in gleichem Maße wie die temperaturabhängige Spannungsabfalländerung über dem Wärmeleitfähigkeitsfühler (3) veränderlich, und der Polung nach dieser Spannungsabfalländerung entgegengesetzt ist.

2. Meßeinrichtung nach Anspruch 1, dadurch gekennzeichnet, daß die Kompensationsspannungsquelle aus einer Kompensations-Konstantstromquelle (8) und einem zu dieser parallel angeordneten abgleichbaren, temperaturempfindlichen elektrischen Widerstand (9) besteht.

3. Meßeinrichtung nach Anspruch 2, dadurch gekennzeichnet, daß dem Widerstand (9) ein temperaturunabhängiger veränderbarer Vorwiderstand (10) vorgeschaltet ist.

4. Meßeinrichtung zum Nachweis des Anteils von brennbaren Gasen in Luft mit mindestens einem Wärmeleitfähigkeitsmeßkreis, der einen auf die Wärmeleitfähigkeit des nachzuweisenden Gasanteils ansprechenden Wärmeleitfähigkeitsfühler (3) sowie eine an den Fühler (3) angeschlossene Konstantstromquelle (6) und einen das temperaturabhängige Wärmeleitfähigkeitsmeßsignal abgebenden Meßsignalanschluß (Upp) aufweist, welcher an eine Signalverarbeitungsanlage (11,13,14) angeschlossen ist, dadurch gekennzeichnet, daß die Signalverarbeitungsanlage einen Datenspeicher (11) enthält, in dem die Temperaturkennliniendaten des Wärmeleitfähigkeitsfühlers (3) gespeichert sind, und an welchen ein Temperaturfühler (9) angeschlossen ist.

5. Meßeinrichtung nach Anspruch 1 oder 4, dadurch gekennzeichnet, daß der Wärmeleitfähigkeitsfühler (3) in einem ersten Fühlerzweig einer Meßbrücke (1) angeordnet ist, die zusätzlich einen auf die Wärmetönung des brennbaren Gases ansprechenden von der Konstantstromquelle (6) gespeisten Meßfühler (2) in einem weiteren Fühlerzweig enthält.

## Claims

1. Measuring device for detecting the content of combustible gases in air, more particularly of methane in air, having at least one heat conductivity measuring circuit which has a heat conductivity measuring sensor (3), which responds to the heat conductivity of the gas content to be detected, as well as a constant current source (6), which is connected to the sensor (3), and a measuring signal connection ($U_{WL}$), characterised in that a series circuit arrangement, consisting of the measuring signal connection ($U_{WL}$) and a compensating voltage source (8, 9, 10), is provided as a parallel branch in relation to the heat conductivity sensor (3) in such a way that the voltage of the compensating voltage source, applied at the heat conductivity sensor (3), on the one hand, and at the measuring signal connection ($U_{WL}$), on the other hand, is variable in amount in the same measure as the temperaturedependent voltage drop variation above the heat conductivity sensor (3) and is opposed in polarity to this voltage drop variation.

2. Measuring device according to claim 1, characterised in that the compensating voltage source consists of a compensating constant current source (8) and an adjustable temperature-sensitive electric resistor (9) which is arranged parallel to the latter.

3. Measuring device according to claim 2, characterised in that a temperature-independent variable series-resistor (10) is connected upstream of the resistor (9).

4. Measuring device for detecting the content of combustible gases in air, having at least one heat conductivity measuring circuit which has a heat conductivity sensor (3), which responds to the heat conductivity of the gas content to be detected, as well as a constant current source (6), which is connected to the sensor (3), and a measuring signal connection ($U_{PP}$) which emits the temperature-dependent heat conductivity measuring signal and which is connected to a signal processing system (11,13,14), characterised in that the signal processing system contains a data memory (11) in which the temperature characteristic curve data of the heat conductivity sensor (3) is stored and to which a temperature sensor (9) is connected.

5. Measuring device according to claim 1 or 4, characterised in that the heat conductivity sensor (3) is arranged in a first sensor branch of a measuring bridge (1) which, in addition, in a further sensor branch contains a measuring sensor (2), which responds to the heat tone of the combustible gas and is fed by the constant current source (6).

## Revendications

1. Dispositif de mesure pour détecter la proportion de gaz combustibles dans de l'air, notamment la proportion de méthane dans de l'air, avec au moins un circuit de mesure de conductibilité thermique, qui présente un capteur de mesure de conductibilité thermique (3) réagissant à la conductibilité thermique de la portion de gaz à détecter, ainsi qu'une source de courant constant (6) raccordée au capteur (3) et un branchement de signal de mesure ($U_{WL}$), caractérisé en ce qu'il est prévu, comme branche parallèle vers le capteur de mesure de conductibilité thermique (3), un montage en série constitué du branchement de signal de mesure ($U_{WL}$) et d'une source de tension de compensation (8, 9, 10), de telle sorte que la tension de la source de tension de compensation, appliquée d'une part au capteur de mesure de conductibilité thermique (3) et d'autre part au branchement de signal de mesure ($U_{WL}$), est variable dans la même mesure, quant à sa valeur, que la modification de chute de tension en fonction de la température à travers le capteur de mesure de conductibilité thermique (3), et est, quant à sa polarité, opposée à cette modification de chute de tension.

2. Dispositif de mesure selon la revendication 1, caractérisé en ce que la soruce de tension de compensation est constituée d'une source de courant constant de compensation (8), et d'une résistance électrique (9) sensible à la température et ajustable, disposée en parallèle avec cette source.

3. Dispositif de mesure selon la revendication 2, caractérisé en ce qu'une résistance série (10), modifiable d'une manière indépendante de la température, est montée en amont de la résistance (9).

4. Dispositif de mesure pour détecter la proportion de gaz combustibles dans de l'air, avec au moins un circuit de mesure de conductibilité thermique, qui présente un capteur de mesure de conductibilité thermique (3) réagissant à la conductibilité thermique de la portion de gaz à détecter, ainsi qu'une source de courant constant (6) raccordée au capteur (3) et un branchement de signal de mesure ($U_{pp}$) délivrant le signal de mesure de conductibilité thermique en fonction de la température, branchement qui est raccordé à une installation de traitement de signaux (11, 13, 14), caractérisé en ce que l'installation de traitement de signaux contient une mémoire de données (11), dans laquelle sont mémorisées les données de courbe caractéristique de température du capteur de mesure de conductibilité thermique (3), et à laquelle est raccordé un capteur de température (9).

5. Dispositif de mesure selon la revendication 1 ou 4, caractérisé en ce que le capteur de mesure de conductibilité thermique (3) est disposé dans une première branche de capteur d'un pont de mesure (1), qui contient en outre, dans une autre branche de capteur, un capteur de mesure (2) alimenté par la source de courant constant (6) et réagissant à la chaleur de réaction du gaz combustible.

EP 0 252 283 B1

Fig. 1

Fig. 2